# EUROPÄISCHE PATENTSCHRIFT

(11) **EP 3 357 141 B1**
(45) Veröffentlichungstag und Bekanntmachung des Hinweises auf die Patenterteilung: **05.05.2021**
(21) Anmeldenummer: 16751247.4
(22) Anmeldetag: 03.08.2016
(51) Int. Cl.: H02K 3/12, H02K 15/04

(54) **IM STECKTECHNIKVERFAHREN HERGESTELLTER STATOR ODER ROTOR EINER ELEKTRISCHEN MASCHINE MIT VERKÜRZTER BLECHLÄNGE**
STATOR OR ROTOR, WHICH IS PRODUCED USING A PLUG-IN TECHNOLOGY METHOD, OF AN ELECTRICAL MACHINE WITH A REDUCED LAMINATION LENGTH
STATOR OU ROTOR, FABRIQUÉ SELON UN PROCÉDÉ DE LA TECHNIQUE D'INSERTION, D'UNE MACHINE ÉLECTRIQUE AVEC UNE LONGUEUR DE TÔLE RACCOURCIE

(30) Priorität: 02.10.2015 DE 102015219077
(43) Veröffentlichungstag der Anmeldung: 08.08.2018
(73) Patentinhaber: Robert Bosch GmbH, 70442 Stuttgart (DE)
(72) Erfinder: ERMER, Martin, 31139 Hildesheim (DE); BEHRENS, Joerg, 31079 Sibbesse (DE); KOOPMANN, Lutz, 31134 Hildesheim (DE)
(86) Internationale Anmeldenummer: PCT/EP2016/068502
(87) Internationale Veröffentlichungsnummer: WO 2017/054968

(56) Entgegenhaltungen:
- EP-A2- 1 376 817
- EP-A2- 1 376 818
- DE-A1-102012 203 300
- JP-A- 2013 121 296
- US-A- 4 437 230
- US-B1- 6 388 358

## Beschreibung

### Stand der Technik

Die vorliegende Erfindung betrifft einen Stator oder Rotor für eine elektrische Maschine, mit elektrischen Leiterschleifen und einem Grundkörper, der sich konzentrisch um eine Achse in eine axiale Richtung erstreckt, wobei der Grundkörper Nuten zur Aufnahme der Leiterschleifen aufweist, wobei die Leiterschleifen jeweils ein erstes Leiterende und ein zweites Leiterende aufweisen, die aus dem Grundkörper herausragen und einen ersten Wickelkopf bilden, und wobei die ersten Leiterenden und die zweiten Leiterenden in gegensätzliche tangentiale Richtungen verschränkt sind. Die vorliegende Erfindung betrifft zudem eine elektrische Maschine mit einem solchen Stator oder Rotor, einen Verstellantrieb für ein Kraftfahrzeug mit einer solchen elektrischen Maschine, sowie ein Verfahren zum Herstellen des Stators oder Rotors.

Bei Statoren und Rotoren, die im Stecktechnik- Verfahren hergestellt sind, werden zu Leiterschleifen geformte elektrische Leiter in Nuten des Grundkörpers eingesteckt und ihre Leiterenden nach einem Wickelschema miteinander verschaltet.

Die Leiterschleifen ragen dafür mit Leiterenden aus dem Grundkörper heraus und bilden einen Wickelkopf, so dass sie von außen zugänglich sind. Beim Verschalten werden immer zumindest zwei Leiterenden verschiedener Leiterschleifen elektrisch und mechanisch miteinander verbunden. Dafür werden die ersten und zweiten Leiterenden in gegensätzlichen tangentialen Richtungen verschränkt, und jeweils das erste Leiterende einer Leiterschleife mit einem zweiten Leiterende einer anderen Leiterschleife elektrisch leitend verbunden.

Um eine geringe Höhe des ersten Wickelkopfes zu erreichen, so dass die aktive Blechlänge des Stators oder Rotors möglichst klein ist, sind die ersten und zweiten Leiterenden so bemessen, dass benachbarte Leiterenden nach dem Biegen in axialer Richtung möglichst aneinander anliegen. Die ersten und zweiten Leiterenden sind dann etwa gleich lang, so dass die ersten Leiterenden und die zweiten Leiterenden um denselben Schränkschritt zu ihrer Nut tangential versetzt sind. Die Druckschrift DE 103 15 361 A1 offenbart ein Verfahren zur Herstellung eines solchen Rotors.

Die Wickelkopfhöhe, mit der die so verschränkten Leiterenden in axialer Richtung aus dem Grundkörper herausragen, ist von mehreren Faktoren abhängig:
- Der Form und dem Durchmesser des Grundkörpers
- Dem Querschnitt, der Anzahl und dem Durchmesser der für die Leiterschleifen verwendeten elektrischen Leiter
- Der Anzahl der Leiter in derselben Nut
- Dem Übergangsradius zwischen Stator oder Rotor und einer Austrittsfläche des Grundkörpers, aus der Leiter aus diesem herausragen
- Der gegebenenfalls verwendeten Verbindungstechnik
- Der Spulenweite der miteinander verbundenen Leiterschleifen
- Dem Schränkschritt
- Der Länge der Leiterenden

Um die Wickelkopfhöhe weiter zu verringern, offenbart die Druckschrift DE 101 49 428 B4 eine im Stecktechnik- Verfahren hergestellte elektrische Maschine, bei der die Leiterenden nach dem Verschränken in tangentiale Richtung nach innen hinein rolliert sind.

Eine verringerte Wickelkopfhöhe hat den Vorteil, dass sich der für die elektrische Maschine erforderliche Bauraum und seine aktive Blechlänge verringern.

Bei der Druckschrift DE 10 2012 203 300 A1 wird eine höhere Windungszahl eines Rotors erreicht, indem mehrere Leiterschleifen in dieselbe Nut des Grundkörpers eingesteckt werden. Um die Leiterenden entsprechend dem Wickelschema miteinander zu verbinden, werden einander benachbarte erste Leiterenden in tangentialer Richtung, und einander benachbarte zweite Leiterenden derselben Nut um denselben Schränkschritt gegen die tangentiale Richtung verschränkt. Dann werden die ersten und zweiten Leiterenden in radialer Richtung gegensätzlich zueinander gebogen, so dass sie oberhalb der Nuten angeordnet sind und einander abwechseln. Danach wird jeweils ein erstes Leiterende mit dem ihm benachbarten zweiten Leiterende elektrisch leitend verbunden. Die EP1 376 818 A2 zeigt eine Statorwicklung und ein Verfahren zur Herstellung einer solchen Statorwicklung. Die US4,437,230 offenbart einen Motor mit abisolierten Leiterenden. Die US6,388,358 B1 zeigt einen Stator eines Wechselstromgenerators in einem Fahrzeug.

### Offenbarung der Erfindung

Aufgabe der vorliegenden Erfindung ist es, einen im Stecktechnik- Verfahren hergestellten Stator oder Rotor für eine elektrische Maschine zu schaffen, der gegenüber einem herkömmlichen im Stecktechnik- Verfahren hergestellten Stator oder Rotor bei gleichem Wickelschema eine verbesserte Performance, d. h. einen besseren Wirkungsgrad sowie
ein besseres Verhältnis ihrer Leistung zu ihrer aktiven Blechlänge, aufweist.

Die Aufgabe wird gelöst mit einem Stator oder Rotor gemäß dem unabhängigen Patentanspruch 1, einer elektrischen Maschine gemäß dem unabhängigen Patentanspruch 10, einem Verstellantrieb gemäß dem unabhängigen Patentanspruch 11, und einem Verfahren gemäß dem unabhängigen Patentanspruch 12. Vorteilhafte Ausführungsformen sind den abhängigen Patentansprüchen entnehmbar.

Dafür wird ein Stator oder Rotor für eine elektrische Maschine geschaffen. Der Stator oder Rotor weist einen Grundkörper auf, der sich konzentrisch um eine Achse erstreckt. In dem Grundkörper sind Nuten angeordnet. Die Nuten sind bevorzugt in tangentialer Richtung zur Achse gleichmäßig verteilt angeordnet. Vorzugsweise erstrecken sie sich in die axiale Richtung.

Zudem weist der Stator oder Rotor Leiterschleifen auf. Die Leiterschleifen sind in die Nuten eingesteckt. Bevorzugt ist jeweils eine Leiterschleife in eine der Nuten eingesteckt. Der Stator oder Rotor ist daher im Stecktechnik- Verfahren hergestellt.

Die Leiterschleifen weisen jeweils ein erstes Leiterende und ein zweites Leiterende auf, die jeweils an einem Ende des Grundkörpers aus diesem herausragen. Die an einem Ende aus dem Grundkörper herausragenden Leiterenden bilden dort einen Wickelkopf. Bevorzugt treten die Leiterenden jeweils in axialer Richtung aus dem Grundkörper heraus.

Vorzugsweise weisen alle Leiterschleifen einen ersten Schenkel auf, an dem das erste Leiterende angeordnet ist, einen zweiten Schenkel, an dem das zweite Leiterende angeordnet ist, sowie einen diese verbindenden Verbindungsschenkel. Die Schenkel derselben Leiterschleife sind bevorzugt im Grundkörper etwa parallel zueinander angeordnet. Besonders bevorzugt sind sie in derselben Nut angeordnet.

Es ist eine Ausführungsform bevorzugt, bei der Leiterenden einiger Leiterschleifen an einem ersten Ende des Grundkörpers aus diesem herausragen, und Leiterenden einiger anderer Leiterschleifen an einem dem ersten

Ende gegenüber liegenden zweiten Ende aus diesem herausragen. Das erste Ende des Grundkörpers ist im Folgenden als Schaltende bezeichnet. Das zweite Ende des Grundkörpers ist im Folgenden als Verbindungsende bezeichnet. Das Schaltende und das Verbindungsende sind bevorzugt an in axialer Richtung gegenüber liegenden Enden des Grundkörpers angeordnet.

In einer besonders bevorzugten Ausführungsform ragen alle Leiterenden an demselben Ende, insbesondere am Schaltende, des Grundkörpers aus diesem heraus. Die Verbindungsschenkel ragen bei dieser Ausführungsform am Verbindungsende aus dem Grundkörper heraus. Die Leiterenden bilden dann am Schaltende einen ersten Wickelkopf, und die Verbindungsschenkel am Verbindungsende einen zweiten Wickelkopf.

Um die Leiterschleifen entsprechend einem vorgegebenen Wickelschema miteinander zu verbinden, sind jeweils die ersten Leiterenden einer Leiterschleife gegenüber den zweiten Leiterenden derselben Leiterschleife in entgegen gesetzte tangentiale Richtungen zur Achse verschränkt. Zudem ist dafür jeweils das erste Leiterende einer der Leiterschleifen mit einem zweiten Leiterende einer um eine Anzahl Nuten zu ihr versetzten anderen Leiterschleife in einem Verbindungspunkt elektrisch leitend verbunden. Dabei sind jeweils nur Leiterenden miteinander verbunden, die an demselben Ende des Stators oder Rotors aus dem Grundkörper herausragen.

Der Stator oder Rotor zeichnet sich dadurch aus, dass jeweils das erste Leiterende zudem in einen in radialer Richtung zur Achse vor den Nuten angeordneten inneren und/oder jeweils das zweite Leiterende in einen in radialer Richtung zur Achse hinter den Nuten angeordneten äußeren Wickelraumteil hinein verschränkt ist.

Dabei ist es bevorzugt, dass jeweils die Leiterenden derselben Leiterschleife in radialer Richtung hintereinander, insbesondere fluchtend, angeordnet sind. Besonders bevorzugt ist jeweils das erste Leiterende einer Leiterschleife in radialer Richtung vor dem zweiten Leiterende derselben Leiterschleife angeordnet. Im Vergleich zu einer Ausführungsform mit in tangentialer Richtung zur Achse nebeneinander angeordneten Leiterenden derselben Leiterschleife vereinfacht diese Anordnung das Verschränken in tangentialer und/oder radialer Richtung, da sich die Leiterenden dabei nicht gegenseitig behindern.

Im Vergleich zu einem herkömmlichen Verschränken der Leiterenden lediglich in gegensätzliche tangentiale Richtungen, bei dem die minimale Wickelkopfhöhe erreicht ist, wenn die benachbarten Leiterenden, insbesondere in axialer Richtung, möglichst aneinander anliegend übereinander gestapelt sind, ermöglicht das Verschränken jeweils zumindest eines der beiden Leiterenden nicht nur in tangentialer Richtung, sondern zudem in den in radialer Richtung vor den Nuten angeordneten inneren, oder in den in radialer Richtung hinter den Nuten angeordneten äußeren Wickelraumteil hinein ein kompakteres Packen der Leiterenden.

Die Leiterenden werden dabei in und gegen die radiale Richtung gebogen. Die in den äußeren Wickelraumteil hinein gebogenen zweiten Leiterenden sind dafür bevorzugt zunächst in und dann gegen die radiale Richtung gebogen, die in den inneren Wickelraumteil hinein gebogenen ersten Leiterenden zunächst gegen und dann in die radiale Richtung. Es ist bevorzugt, dass die in einen der beiden Wickelraumteile hinein verschränkten Leiterenden etwa bogenförmig geformt sind.

Zudem werden sie verdreht. Dadurch sind sie zumindest streckenweise nicht nur in axialer Richtung übereinander, sondern in radialer und axialer Richtung einander überschneidend angeordnet. Die zusätzlich in radialer Richtung verschränkten Leiterenden sind zumindest streckenweise auch nebeneinander anliegend angeordnet. Sie sind zumindest teilweise treppenartig versetzt zueinander angeordnet. Der so gebildete Wickelkopf weist eine verringerte Höhe auf.

Aufgrund der geringeren Wickelkopfhöhe ist die Baulänge des Stators oder Rotors verringert, so dass ein geringerer Materialaufwand entsteht, und gegebenenfalls Bauteile eingespart werden können, Insgesamt verringern sich daher die Kosten für den Stator oder Rotor. Eine elektrische Maschine mit einem solchen Stator oder Rotor ist aufgrund der geringeren Baulänge auch für Anwendungen mit geringerem zur Verfügung stehendem Bauraum verwendbar. Zudem ist die thermische Belastung der elektrischen Maschine aufgrund ihrer geringeren Baulänge geringer, so dass gegebenenfalls Bauteile wie beispielsweise Kühlkomponenten entfallen können. Weiterhin entstehen aufgrund der verringerten Baulänge nicht nur für viele Bauteile der elektrischen Maschine sondern auch der sie umgebenden Vorrichtung verringerte Materialkosten. Außerdem verbessert die verringerte aktive Blechlänge die Performance der elektrischen Maschine, d. h. ihren Wirkungsrad sowie ihre Leistung im Verhältnis zu ihrer aktiven Blechlänge.

Für das Verschränken der Leiterenden in und gegen die radiale Richtung in den inneren oder äußeren Wickelraumteil hinein wird bevorzugt Bauraum des Stators oder Rotors genutzt, der aufgrund der Ausmaße und des Querschnitts des Grundkörpers ohnehin zur Verfügung steht. Dafür ist es bevorzugt, dass die verschränkten Leiterenden nicht in oder gegen die radiale Richtung über eine Austrittsfläche des Grundkörpers, aus der sie aus diesem heraustreten, hinausragen. Der innere Wickelraumteil dieser Ausführungsform des Stators oder Rotors ist daher durch eine fiktive Innenfläche begrenzt, die durch eine Innenmantelfläche des Grundkörpers aufgespannt ist. Der äußere Wickelraumteil dieser Ausführungsform des Stators oder Rotors ist daher durch eine fiktive Außenfläche begrenzt, die durch eine Außenmantelfläche des Grundkörpers aufgespannt ist. Die fiktive Innenfläche, die fiktive Außenfläche und die Austrittsfläche begrenzen daher die Wickelräume an den beiden Enden des Stators oder Rotors. Der durch das zusätzliche Verschränken der Leiterenden in oder gegen die radiale Richtung in den inneren und/oder äußeren Wickelraumteil hinein vergrößerte Wickelkopf behindert daher die Welle nicht, und ragt auch nicht in den Luftspalt der elektrischen Maschine hinein.

Dafür ist es bevorzugt, dass jeweils ein Schränkschritt des ersten Leiterendes der beiden miteinander verbundenen Leiterschleifen, das heißt ein Abstand der Nut, aus dem das erste Leiterende aus dem Grundkörper herausragt, von ihrem Verbindungspunkt, ungleich einem Schränkschritt des zweiten Leiterendes ist. Dadurch sind das erste Leiterende und das zweite Leiterende der beiden miteinander verbundenen Leiterschleifen zumeist ungleich lang. Es hat sich aber gezeigt, dass jeweils eine Gesamtleiterendenlänge, das heißt die Summe der Längen des ersten Leiterendes und des zweiten Leiterendes der beiden miteinander verbundenen Leiterenden, etwa gleich der Gesamtleiterendenlänge eines herkömmlichen Stators oder Rotors mit gleichlangen Leiterenden ist. Der durch die Leiterschleifen verursachte Kupferanteil wird daher nicht erhöht. Zudem ermöglicht die Ausnutzung des inneren und/oder äußeren Wickelraumteils einen beliebigen Schränkschritt. Die Wickelkopfform ist daher an die Bauraumverhältnisse anpassbar.

Besonders bevorzugt ist zumindest das längere der beiden miteinander verbundenen Leiterenden in den äußeren oder inneren Wickelraumteil hinein verschränkt. Ganz besonders bevorzugt sind die ersten Leiterenden aller Leiterschleifen des Stators oder Rotors gleich lang, und die zweiten Leiterenden aller Leiterschleifen des Stators oder Rotors gleich lang, so dass die Wickelkopfform des Stators oder Rotors symmetrisch ist.

Die Leiterenden weisen jeweils ein offenes Ende auf. Vorzugsweise sind die Leiterpaare jeweils an ihren offenen Enden in dem Verbindungspunkt elektrisch leitend verbunden. Weiterhin ist es bevorzugt, dass die Leiterschleifen als Flachleiter ausgebildet sind, oder das zumindest die Leiterenden als Flachleiter geformt sind, insbesondere eckig oder konisch. Es können aber auch runde Leiter genutzt werden. Besonders bevorzugt sind die Leiterschleifen aus einem Bandmaterial gefertigt. In einer ganz besonders bevorzugten Ausführungsform ist ein Querschnitt der Leiterschleifen, insbesondere der Querschnitt der in der Nut angeordneten Schenkel der Leiterschleifen, den Nutfüllfaktor erhöhend geprägt.

Die Aufgabe wird weiterhin gelöst mit einer elektrischen Maschine mit einem solchen Stator oder Rotor. Die elektrische Maschine ist bevorzugt ein Motor, insbesondere ein Synchronmotor oder ein Gleichstrommotor. Die Erfindung ist aber nicht auf Motoren beschränkt, sondern auch für Generatoren anwendbar.

Die Aufgabe wird weiterhin gelöst mit einem Antrieb für ein Kraftfahrzeug mit einer solchen elektrischen Maschine. Ein solcher Antrieb ist bevorzugt ein Lenkmotor, ein elektrischer Fahrantrieb, ein Startermotor oder ein Verstellmotor. Die Erfindung ist aber auch für Generatoren oder Hybridantriebe verwendbar. Zudem ist sie nicht nur für Kraftfahrzeuge nutzbar, sondern auch für elektrische Fahrräder, Scooter oder Handwerkzeugmaschinen.

Die Aufgabe wird weiterhin gelöst mit einem Verfahren, bei dem
- die ersten Leiterenden und/oder die zweiten Leiterenden in und gegen die radiale Richtung verschränkt werden, so dass sie sich bogenförmig in den inneren oder in den äußeren Wickelraumteil hinein erstrecken, und
- die ersten Leiterenden und die zweiten Leiterenden anschließend in entgegen gesetzte tangentiale Richtungen verschränkt werden.

Durch das Verschränken in radiale Richtung werden die Leiterenden treppenartig versetzt zueinander angeordnet. Dadurch verringert sich die Wickelkopfhöhe, so dass die Baulänge des Stators oder Rotors verringert ist. Dabei wird ein aufgrund der Ausmaße des Grundkörpers ein ohnehin vorhandener Bauraum des Stators oder Rotors genutzt.

Die Schränkschritte des jeweils ersten Leiterendes und des mit diesem verbundenen zweiten Leiterendes sind dann ungleich. Sie sind durch Veränderung der Länge jeweils der beiden miteinander verbundenen Leiterenden an die Bauraumverhältnisse anpassbar. Dabei bleibt die Gesamtleiterendenlänge bevorzugt unverändert.

Besonders bevorzugt werden die ersten Leiterenden in den der Achse zugewandten inneren Wickelraumteil und/oder die zweiten Leiterenden in den der Achse abgewandten äußeren Wickelraumteil hinein gebogen. Anschließend werden jeweils das erste Leiterende einer der Leiterschleifen mit dem zweiten Leiterende einer um eine Anzahl Nuten zu ihr versetzten anderen Leiterschleife in dem Verbindungspunkt elektrisch leitend verbunden.

Eine minimale Wickelkopfhöhe des so hergestellten Wickelkopfes ist nicht mehr durch die Eingangs genannten Faktoren beschränkt, sondern durch Nutzung des inneren Wickelraumteils und/oder des äußeren Wickelraumteils erheblich kürzer herstellbar.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt in **(a)** einen im Stecktechnik Verfahren hergestellten Rotor nach dem Stand der Technik, und in **(b)** eine Leiterschleife für einen solchen Rotor;
- **Fig. 2**: zeigt schematisch einen erfindungsgemäßen Rotor mit in und gegen die radiale Richtung gebogenen zweiten Leiterenden, und zwar in **(a)** vor und in **(b)** nach dem Schränken;
- **Fig. 3**: zeigt in **(a)** eine weitere Ausführungsform eines erfindungsgemäßen Rotors mit in und gegen die radiale Richtung gebogenen zweiten Leiterenden vor dem Schränken, und in **(b)** und **(c)** den Rotor aus **(a)** nach dem Schränken;
- **Fig. 4**: zeigt schematisch einen Ausschnitt des Rotors aus **Fig. 3** in einem Schnittbild nach dem Schränken; und
- **Fig. 5**: zeigt eine weitere Ausführungsform eines erfindungsgemäßen Rotors nach dem Schränken und mit elektrisch verbundenen Leiterenden der Leiterschleifen.

Die folgenden **Figuren** zeigen durchweg im Stecktechnik- Verfahren hergestellte Rotoren 1. Die Erfindung ist aber nicht auf Rotoren 1 beschränkt, sondern in analoger Weise auch auf im Stecktechnik- Verfahren hergestellte Statoren (nicht gezeigt) anwendbar.

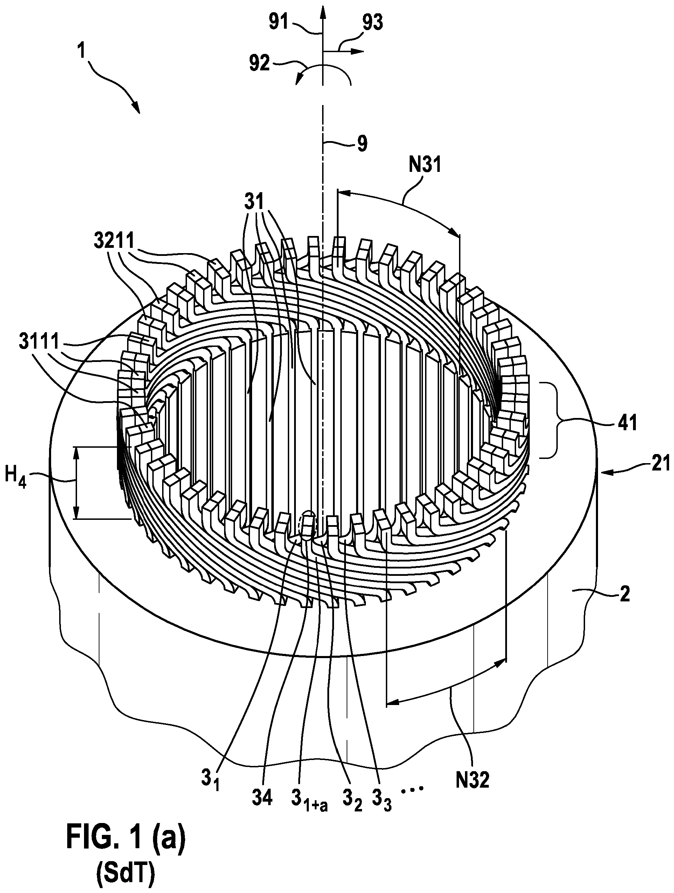

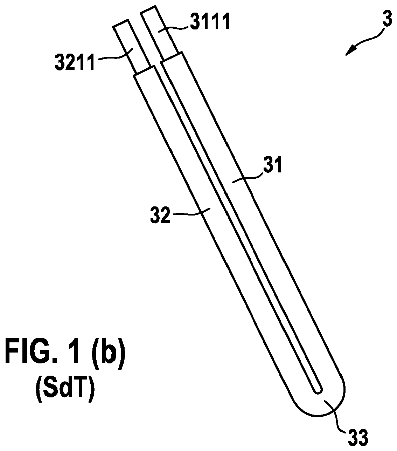

**Fig. 1** zeigt einen im Stecktechnik- Verfahren hergestellten Rotor 1 nach dem Stand der Technik.

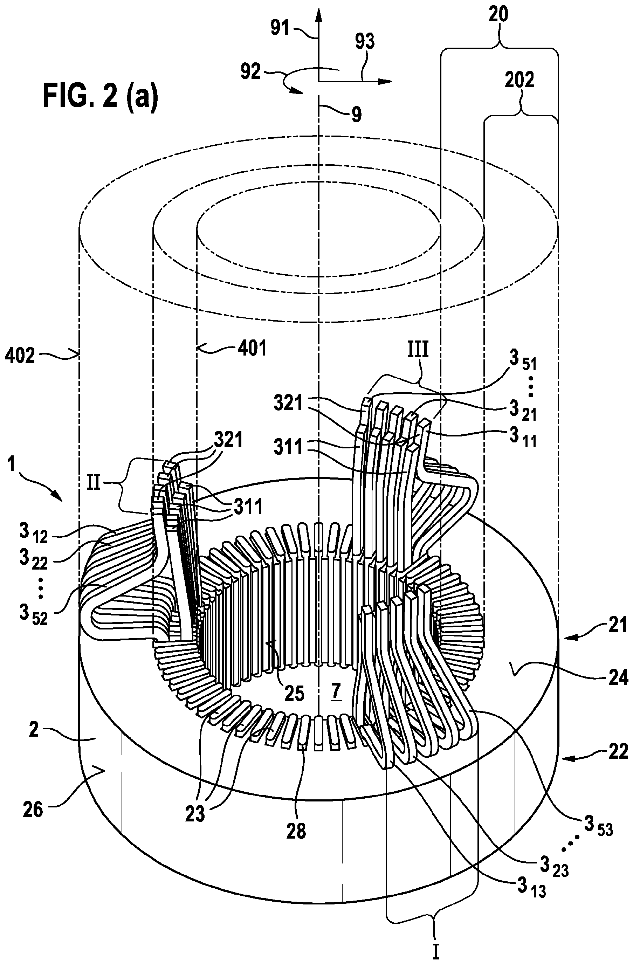

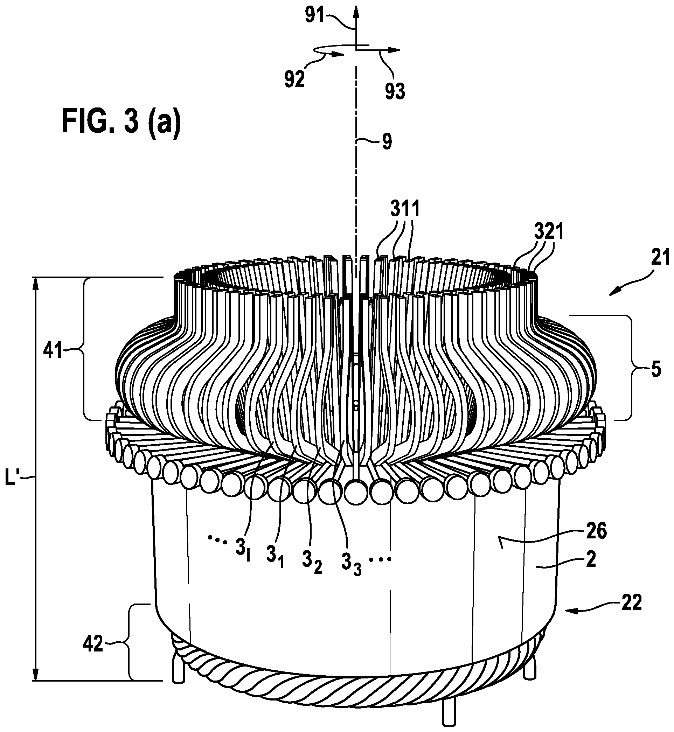

Der Rotor 1 weist einen zylindrisch ausgebildeten Grundkörper 2 auf, der sich in eine axiale Richtung 91 einer Achse 9 von einem ersten Ende 21 aus zu einem zweiten Ende 22 (s. **Fig. 3 (a)****)** erstreckt. Der Grundkörper 2 ist konzentrisch zur Achse 9 angeordnet. Er weist einen Innenraum 7 (s. **Fig. 2 (a)****)** auf, der zur Aufnahme einer Welle (nicht gezeigt) vorgesehen ist.

In dem Grundkörper 2 sind in tangentialer Richtung 92 zur Achse 9 gleichmäßig verteilt Nuten 23 (s. **Fig. 2 (a)****)** angeordnet. Die Nuten 23 erstrecken sich in die axiale Richtung 91. Sie sind zur Aufnahme von Leiterschleifen 3₁, 3₂, ...3ᵢ vorgesehen.

Die Leiterschleifen 3₁, 3₂, ...3ᵢ weisen jeweils einen ersten Schenkel 31 und einen zweiten Schenkel 32 auf, die mit einem Verbindungsschenkel 33 miteinander verbunden sind (s. **Fig. 1 (b)****).** Der erste und der zweite Schenkel 31, 32 sind zueinander parallel angeordnet. Sie weisen jeweils ein offenes Ende 3111, 3211 auf. Die Leiterschleifen 3₁, 3₂, ...3ᵢ sind in herkömmlicher Art und Weise elektrisch isolierend ummantelt. Am offenen Ende 3111, 3211 sind sie abisoliert.

Die Leiterschleifen 3₁, 3₂, ...3ᵢ sind in die Nuten 23 eingesteckt. Dabei ist jeweils eine Leiterschleife 3₁, 3₂, ...3ᵢ in einer Nut 23 angeordnet. Die Schenkel 31, 32 der Leiterschleifen 3₁, 3₂, ...3ᵢ sind in radialer Richtung 93 zur Achse 9 fluchtend zueinander angeordnet. Dabei ist der erste Schenkel 31 jeweils in radialer Richtung 93 vor dem zweiten Schenkel 32 angeordnet.

Die Leiterschleifen 3₁, 3₂, ...3ᵢ ragen hier alle am ersten Ende 21, im Folgenden am Schaltende, mit Leiterenden 311, 321 aus dem Grundkörper 2 heraus. Dabei ist ein erstes Leiterende 311 am ersten Schenkel 31 und ein zweites Leiterende 321 am zweiten Schenkel 32 angeordnet. Die Leiterenden 311, 321 weisen jeweils die offenen Enden 3111, 3211 auf.

Um den Rotor 1 nach einem Wickelschema zu verschalten, ist jeweils ein erstes Leiterende 311 einer Leiterschleife 3₁ in einem Verbindungspunkt 34 mit einem zweiten Leiterende 321 einer um eine Anzahl Nuten 23 zur ersten Leiterschleife 3₁ versetzten zweiten Leiterschleife 3₁₊ₐ elektrisch leitend verbunden. Der Verbindungspunkt 34 ist hier beispielhaft nur für ein Leiterpaar 30 (3₁ und 3₁₊ₐ) schematisch gezeigt.

Dafür sind die ersten Leiterenden 311 und die zweiten Leiterenden 321 alle gleich lang. Zudem sind die ersten Leiterschleifen 311 in tangentiale Richtung 92 und die zweiten Leiterschleifen 321 gegen die tangentiale Richtung 92 verschränkt. Sie sind dafür soweit in oder gegen die tangentiale Richtung 92 gebogen, dass sie in axialer Richtung 91 zumindest teilweise aneinander anliegen. Die einander benachbarten Leiterenden 311, 321 sind daher in axialer Richtung 91 zumindest teilweise übereinander angeordnet.

Der Verbindungspunkt 34 ist mittig zwischen den beiden zu verbindenden Leiterenden 311, 321 angeordnet. Ein Schränkschritt N31 der ersten Leiterenden 311, das heißt jeweils ein Abstand der Nut 23 der ersten Leiterenden 311 von ihrem Verbindungspunkt 34, ist daher gleich einem Schränkschritt N32 der zweiten Leiterenden 32.

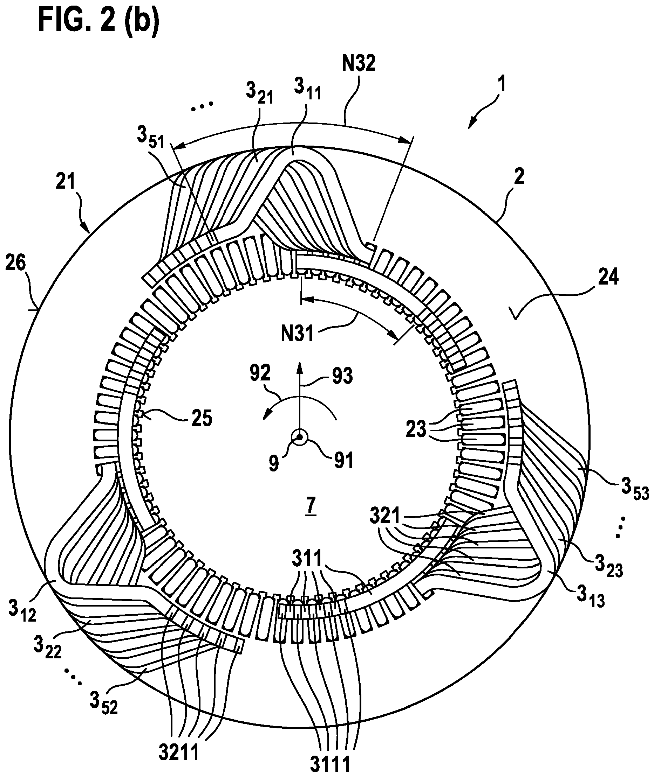

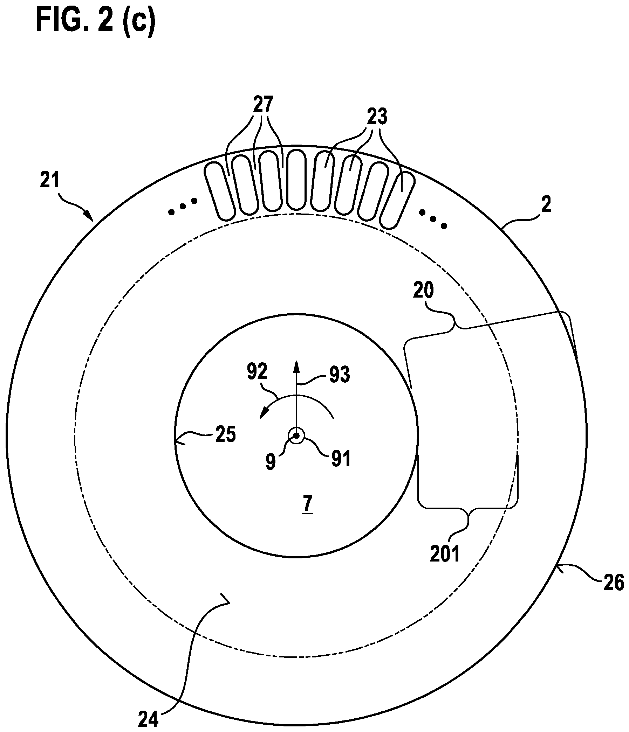

**Fig. 2** zeigt schematisch einen erfindungsgemäßen Rotor 1 während der Herstellung. Der Rotor 1 weist Leiterschleifen 3₁, 3₂, ...3ᵢ mit in und gegen die radiale Richtung 93 gebogenen zweiten Leiterenden 321 auf.

Auch dieser Rotor 1 weist den zylindrisch ausgebildeten Grundkörper 2 mit den in tangentialer Richtung 93 gleichmäßig verteilten Nuten 23 auf, die zur Aufnahme der Leiterschleifen 3₁, 3₂, ...3ᵢ vorgesehen sind.

Der Grundkörper 2 erstreckt sich ebenfalls in die axiale Richtung 91 von dem ersten Ende 21 aus zu dem zweiten Ende 22. Er ist ebenfalls konzentrisch zur Achse 9 angeordnet und weist den Innenraum 7 zur Aufnahme der Welle auf. Zum Innenraum 7 hin ist der Grundkörper 2 durch eine Innenmantelfläche 25 begrenzt, die sich konzentrisch um die Achse 9 erstreckt. Zudem ist der Grundkörper 2 durch eine Außenmantelfläche 26 begrenzt, die in radialer Richtung 93 hinter der Innenmantelfläche 25 angeordnet ist, und die sich ebenfalls konzentrisch um die Achse 9 erstreckt. In axialer Richtung 91 erstreckt sich der Grundkörper 2 vom ersten Ende 21 aus bis zum zweiten Ende 22.

In dem Grundkörper 2 sind in tangentialer Richtung 92 zur Achse 9 gleichmäßig verteilt die Nuten 23 angeordnet. Die Nuten 23 erstrecken sich ebenfalls in die axiale Richtung 91 und sind zur Aufnahme der Leiterschleifen 3₁, 3₂, ...3ᵢ vorgesehen.

Die Leiterschleifen 3₁, 3₂, ...3ᵢ sind in die Nuten 23 eingesteckt. Beispielhaft sind drei Gruppen I, II, III mit jeweils fünf Leiterschleifen 3₁₁ - 3₅₁, 3₁₂ - 3₅₂, 3₁₃ - 3₅₃ in Nuten 23 vorgesehen. Die Gruppen I, II, III sind zur besseren Verständlichkeit voneinander beabstandet.

Die Leiterschleifen 3₁₁ - 3₅₁, 3₁₂ - 3₅₂, 3₁₃ - 3₅₃ weisen jeweils den ersten und den zweiten Schenkel 31, 32 mit den Leiterenden 311, 321, sowie den Verbindungsschenkel 33 auf. Die Leiterenden 311, 321 weisen jeweils die offenen Enden 3111, 3211 auf. Sie ragen am ersten Ende 21 des Rotors 1 mit ihren Leiterenden 311, 321 an einer Austrittsfläche 24 des Grundkörpers 2 aus diesem heraus.

Dabei ist jeweils eine Leiterschleife 3₁, 3₂, ...3ᵢ in einer Nut 23 angeordnet. Die Schenkel 31, 32 der Leiterschleifen 3₁, 3₂, ...3ᵢ sind in radialer Richtung 93 zur Achse 9 fluchtend zueinander angeordnet. Dabei ist der erste Schenkel 31 jeweils in radialer Richtung 93 vor dem zweiten Schenkel 32 angeordnet.

Die Nuten 23 weisen eine Längserstreckung (nicht bezeichnet) in axialer Richtung 91 auf. In radialer Richtung 93 sind sie länger, als sie in tangentialer Richtung 92 breit sind. Sie erstrecken sich in radialer Richtung 93 von der Innenmantelfläche 25 aus in den Grundkörper 2 hinein. Der Grundkörper 2 weist daher zwischen den Nuten 23 Stege 27 auf, die sich gegen die radiale Richtung 93 erstrecken. Die Stege 27 sind an der Innenmantelfläche 25 verbreitert und durch die Nuten 23 voneinander getrennt. Die Verbreiterungen (nicht bezeichnet) der Stege 27 an der Innenmantelfläche 25 bilden für die Leiterschleifen 3₁₁ - 3₅₁, 3₁₂ - 3₅₂, 3₁₃ - 3₅₃ jeweils einen Anschlag, der ihr Verschieben gegen die radiale Richtung 93 verhindert.

In die Nuten 23 ist jeweils eine Isolierung 28, hier beispielhaft aus Papier oder Kunststoff, vorgesehen. Die Isolierung 28 umgibt die Schenkel 31, 32 der Leiterschleifen 3₁₁ - 3₅₁, 3₁₂ - 3₅₂, 3₁₃ - 3₅₃ vollumfänglich und isoliert sie elektrisch vom Grundkörper 2. Bevorzugt ist auch eine die Schenkel 31, 32 umgebende, jeweils in die Nuten 23 eingefüllte Vergussmasse.

Am ersten Ende 21 des Grundkörpers erstreckt sich ein erster Wickelraum 20 in axialer Richtung 91. Der erste Wickelraum 20 ist durch die Austrittsfläche 24, eine Innenfläche 401, die durch die Innenmantelfläche 201 aufgespannt ist, und eine Außenfläche 402, die durch die Außenmantelfläche 202 aufgespannt ist, begrenzt. Der Wickelraum 20 am ersten Ende 21 des Grundkörpers 2 weist einen äußeren Wickelraumteil 202 auf, der in radialer Richtung 93 hinter den Nuten 23 angeordnet ist und sich bis zur Außenmantelfläche 26 erstreckt. Da sich die Nuten 23 bis zur Innenmantelfläche 25 erstrecken, weist der Rotor 1 dieses Ausführungsbeispiels keinen innerer Wickelraumteil 201 auf.

Nur zur Verdeutlichung eines inneren Wickelraumteils 201 zeigt die Fig. 2 (c) schematisch das erste Ende 21 (Schaltende) eines Grundkörpers 2 für einen Stator oder Rotor 1 in einer Draufsicht. In diesem Grundkörper 2 sind in tangentialer Richtung 92 gleichmäßig verteilt ebenfalls Nuten 23 vorgesehen. Diese erstrecken sich aber von seiner Außenmantelfläche 26 aus gegen die radiale Richtung 93. Der Wickelraum am ersten Ende 21 des Grundkörpers 2 dieses Stators oder Rotors 1 weist daher einen inneren Wickelraumteil 201 auf, der sich von einer Innenfläche 401, die durch die Innenmantelfläche 201 des Grundkörpers 2 aufgespannt ist, in radialer Richtung 93 bis zu den Nuten 23 erstreckt. Er weist aber keinen äußeren Wickelraumteil 202 auf.

In der in **Fig. 2 (a)** dargestellten Ausführungsform des Stators oder Rotors sind die ersten Leiterenden 311 unverschränkt und erstrecken sich in die axiale Richtung 91. Die zweiten Leiterenden 321 sind zwar in und gegen die radiale Richtung 93 in den äußeren Wickelraumteil 202 hinein gebogen. Sie sind daher zumindest teilweise bogenförmig ausgebildet. Die zweiten Leiterenden 321 sind aber nicht tangential verschränkt. Zudem sind die offenen Enden 3211 der zweiten Leiterenden 321 etwa fluchtend zu ihrer Nut 23 angeordnet.

In der **Fig. 2 (b)** sind die ersten Leiterenden 311 gegen die tangentiale Richtung 92, und die zweiten Leiterenden 321 in die tangentiale Richtung 92 verschränkt. Sichtbar ist, dass durch das Verschränken die offenen Enden 3111 der ersten Leiterenden 311 um einen ersten Schränkschritt N31, und die offenen Enden 3211 der zweiten Leiterenden 321 um einen zweiten Schränkschritt N32 zu ihrer Nut 23 versetzt angeordnet werden.

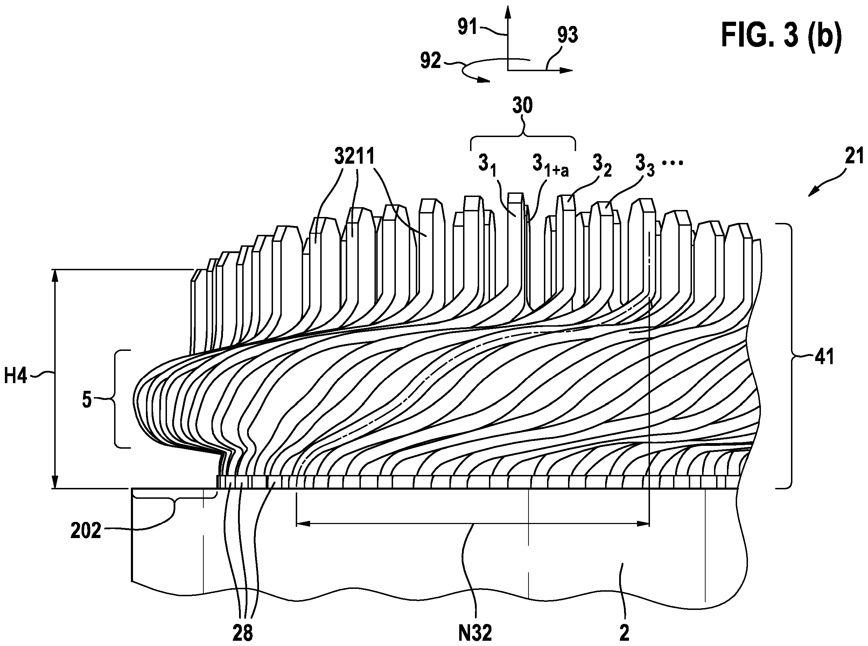

Eine Länge (nicht bezeichnet) der Leiterenden 311, 321 ist jeweils so bemessen, dass immer ein erstes Leiterende 311 einer ersten Leiterschleife 3₁ in radialer Richtung 93 fluchtend zu einem zweiten Leiterende 321 einer um eine Anzahl Nuten 23 zu ihr versetzten anderen Leiterschleife 3₁₊ₐ angeordnet ist. Dies zeigt **Fig. 3 (b)****.**

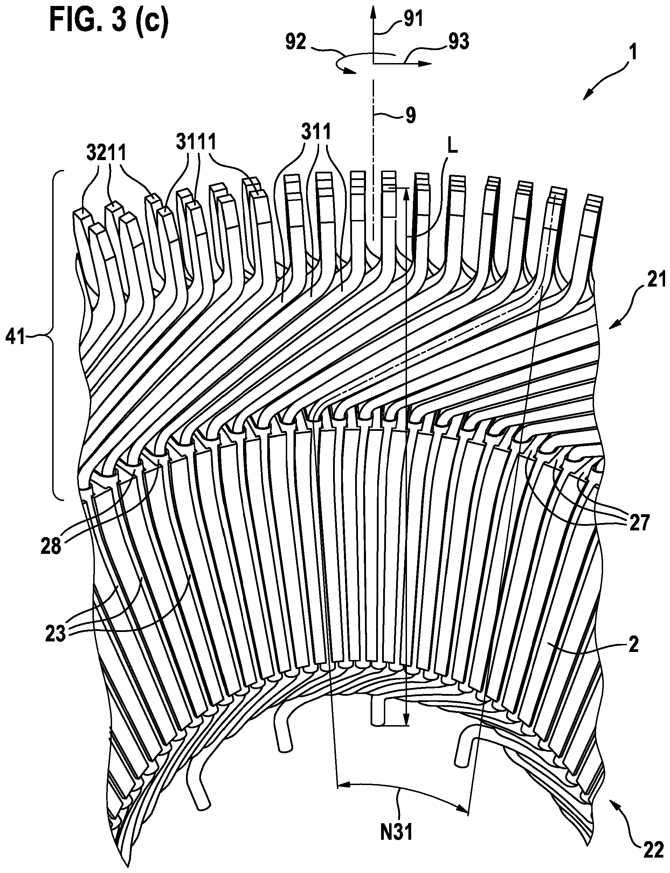

In **Fig. 3** ist eine weitere Ausführungsform eines erfindungsgemäßen Rotors 1 in einer perspektivischen Ansicht während der Herstellung dargestellt. Dieser Rotor 1 weist neben einem ersten Wickelkopf 41, der am ersten Ende 21 des Grundkörpers 2 angeordnet ist, einen zweiten Wickelkopf 42 auf, der am zweiten Ende 22 des Grundkörpers 2 angeordnet ist. Der erste Wickelkopf 41 ist durch die ersten und zweiten Leiterenden 311, 321 aller Leiterschleifen 3₁, 3₂, ...3ᵢ des Rotors 1 gebildet. Das erste Ende 21 ist daher das Schaltende des Rotors 1. Die Leiterenden 311, 321 aller Leiterschleifen 3₁, 3₂, ...3ᵢ dieses Rotors 1 ragen daher am Schaltende 21 aus dem Grundkörper 2 heraus. Der zweite Wickelkopf 42 ist durch die Verbindungsschenkel 33 der Leiterschleifen 3₁, 3₂, ...3ᵢ gebildet. Das zweite Ende 22 wird im Folgenden daher auch als Verbindungsende des Rotors 1 bezeichnet.

Die Nuten 23 erstrecken sich auch bei diesem Rotor 1 von der Innenmantelfläche 25 des Grundkörpers 2 aus in die radiale Richtung 93. Der Rotor 1 weist daher keinen inneren Wickelraumteil 201 auf (s. **Fig. 3 (c)****).** Die Außenmantelfläche 26 ist aber in radialer Richtung 93 hinter den Nuten 23 und von diesen beabstandet angeordnet, so dass er sowohl am Schaltende 21 als auch am Verbindungsende 22 einen äußeren Wickelraumteil 202 aufweist.

Um die Baulänge L (s. **Fig. 3(c)****)** des Rotors 1 möglichst klein zu halten, sind die Verbindungsschleifen 33 hier rolliert.

Zudem sind die zweiten Leiterenden 321 der Leiterschleifen 3₁, 3₂, ...3ᵢ am Schaltende 21 des Grundkörpers 2 nicht nur in tangentialer Richtung 92, sondern auch in den äußeren Wickelraumteil 202 hinein gebogen. Dafür sind die zweiten Leiterenden 321 zunächst in und dann gegen die radiale Richtung 93 in den äußeren Wickelraumteil 202 hinein gebogen. Dadurch sind sie zumindest teilweise bogenförmig ausgebildet. Der bogenförmig ausgebildete Bereich der zweiten Leiterenden 321 ist mit dem Bezugszeichen 5 bezeichnet. Die offenen Enden 3211 der zweiten Leiterenden 321 sind hier in axialer Richtung 91 noch oberhalb, insbesondere fluchtend, ihrer Nut 23 angeordnet. Dies zeigt **Fig. 3 (a)****.**

Die ersten Leiterenden 311 sind in der **Fig. 3 (a)** noch unverschränkt und erstrecken sich in die axiale Richtung 91. Sie sind in radialer Richtung 92 vor den zweiten Leiterenden 321 und fluchtend zu diesen angeordnet. Da die ersten und zweiten Leiterenden 311, 321 hier noch nicht in gegensätzlichen tangentialen Richtungen 92 verschränkt sind, ist die Baulänge L' des Rotors 1 während der Herstellung noch länger, als seine Baulänge L nach dem Verschränken (s. **Fig. 3(c)****)** der Leiterenden 311, 321.

Um den Rotor 1 nach dem Wickelschema zu verschalten, und das erste Leiterende 311 einer Leiterschleife 3₁ in dem Verbindungspunkt 34 mit dem zweiten Leiterende 321 der um die Anzahl Nuten 23 zur ersten Leiterschleife 3₁ versetzten zweiten Leiterschleife 3₁₊ₐ elektrisch leitend zu verbinden, werden die ersten und zweiten Leiterenden 311, 321 in gegensätzliche tangentiale Richtungen 93 verschränkt. Gegebenenfalls werden die zweiten Leiterenden 321 dabei zudem zueinander verdreht. Dadurch behindern sich benachbarte zweite Leiterenden 321 nicht gegenseitig, sondern sie werden zueinander versetzt angeordnet. Die offenen Enden 3111, 3211 der Leiterenden 311, 321 des miteinander zu verbindenden Leiterpaares 30 sind dann in radialer Richtung etwa fluchtend zueinander angeordnet, so dass sie im Verbindungspunkt 34 miteinander verbindbar sind.

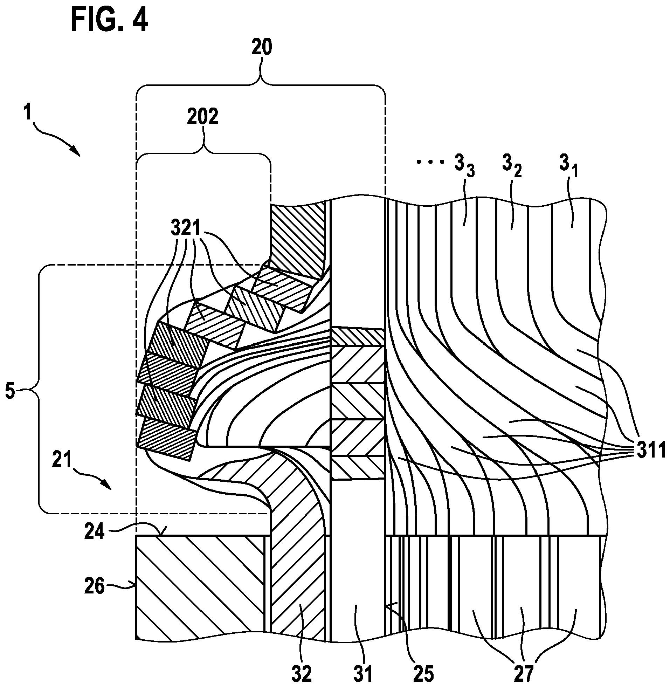

Nach dem Verschränken sind die offenen Enden 3111 der ersten Leiterenden 311 um einen ersten Schränkschritt N31, und die offenen Enden 3211 der zweiten Leiterenden 321 um einen zweiten Schränkschritt N32 zu ihrer Nut 23 versetzt. Dabei ist die Länge der ersten Leiterenden 311 so gewählt, dass die benachbarten ersten Leiterenden 311 in axialer Richtung 91 zumindest teilweise übereinander und möglichst aneinander anliegend angeordnet sind. Die zweiten Leiterenden 321 sind dann treppenartig zueinander versetzt angeordnet. **Fig. 4** zeigt dies schematisch. Der Wickelkopf 41 ist nun in den äußeren Wickelraumteil 202 hinein geformt und dadurch zwar ballig aber kürzer ausgebildet.

Bei dieser Ausführungsform des Rotors 1 sind die zweiten Leiterenden 321 länger als die ersten Leiterenden 311. Zudem sind die Schränkschritte N31, N32 der ersten Leiterenden 311 und der zweiten Leiterenden 321 verschieden. Sichtbar ist in **Fig. 3 (b)****,** dass der zweite Schränkschritt N32 hier 9 ½ beträgt. Der erste Schränkschritt N31 der ersten Leiterenden 311 beträgt hier 7 ½, wie **Fig. 3 (c)** zeigt. Die Summe der Schränkschritte N31, N32, hier 17, ist die Anzahl der Nuten 23, um die die erste Leiterschleife 3₁ und die zweite Leiterschleife 3₁₊ₐ der miteinander zu verbindenden Leiterpaare 30 zueinander versetzt sind.

Der zweite Schränkschritt N32 ist hier größer als der erste Schränkschritt N31. Es hat sich gezeigt, dass zur Realisierung desselben Wickelschemas durch Änderung der Länge der Leiterenden 311, 321 eine Vielzahl verschiedener Schränkschritte N31, N32 einstellbar sind. Der erste Wickelkopf 41, insbesondere seine Wickelkopfform und seine Wickelkopfhöhe H4, ist dadurch an die Bauraumverhältnisse des Rotors 1 und der elektrischen Maschine anpassbar.

Um den für den Rotor 1 erforderlichen Kupferanteil nicht unnötig zu erhöhen, werden die Längen der Leiterenden 311, 321 dabei bevorzugt so gewählt, dass eine Gesamtleiterendenlänge (nicht bezeichnet), das heißt die Summe der Längen des ersten Leiterendes 311 und des mit ihm elektrisch verbundenen zweiten Leiterendes 321, etwa gleich der Gesamtleiterendenlänge ist, die bei gleichem erstem und zweitem Schränkschritt N31, N32 benötigt wird.

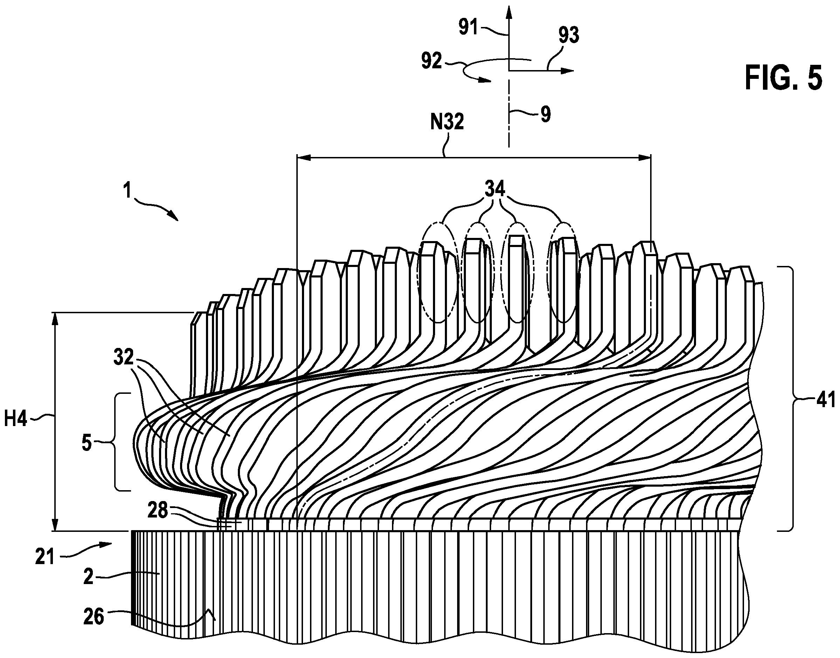

**Fig. 5** zeigt eine weitere Ausführungsform eines erfindungsgemäßen Rotors 1 mit einigen im Verbindungspunkt 34 elektrisch leitend miteinander verbundenen, insbesondere verlöteten oder verschweißten, offenen Enden 3111, 3211. Der Verbindungspunkt ist hier nur schematisch durch gestrichelte Linien dargestellt. Der Rotor 1 unterscheidet sich von dem der **Fig. 3** durch eine geprägte Außenmantelfläche 26 des Grundkörpers 2.

Die offenen Enden 3111, 3211 der Leiterschleifen 31, 32 erstrecken sich hier in axialer Richtung 91. Bevorzugt ist aber auch eine Anordnung der offenen Enden 3111, 3211 beziehungsweise der Verbindungspunkte 34 in einem Winkel (nicht gezeigt) größer als Null zur axialen Richtung 91, insbesondere in einem rechten Winkel zur axialen Richtung 93.

Ein so gebildeter erster Wickelkopf 41 ermöglicht eine Anpassung an die Bauraumverhältnisse der elektrischen Maschine und ihrer Umgebung. Je nach dem, wo Bauraum zur Verfügung steht, kann der erste Wickelkopf 41 in axialer Richtung 91, in den inneren Wickelraumteil 201 und/oder in den äußeren Wickelraumteil 202 hinein geformt werden. Dadurch sind auch über die axiale Länge L gesehen ungleichmäßige Durchmesser (nicht bezeichnet) gestaltbar, z. B. wenn eine Kollision mit einem anderen Bauteil vorliegen würde.

Da die Baulänge L des Stators oder Rotors 1 verkürzt wird, wird entsprechend weniger Baumaterial für Gehäuse, Grundkörper 2 (Lamellenpaket), zugehörigem Rotor oder Stator, Welle etc. benötigt. Dadurch können die Kosten für den Stator oder Rotor 1 und die mit ihm gefertigte elektrische Maschine verringert werden. Bei gleicher Baulänge L weist die elektrische Maschine hingegen einen verbesserten Wirkungsgrad auf.

Ein solches Verschränken ist auch für Statoren oder Rotoren 1 möglich, bei denen beispielsweise zum Erreichen einer höheren Windungszahl mehrere Leiterschleifen 3₁, 3₂ ... 3ᵢ in dieselbe Nut 23 des Grundkörpers 2 eingesteckt werden. Dann werden die jeweils in radialer Richtung 93 vorderen ersten Leiterenden 311 der Leiterschleifen 3₁, 3₂ ... 3ᵢ in den inneren Wickelraumteil 201, und/oder die jeweils in radialer Richtung 93 hinteren zweiten Leiterenden 321 der Leiterschleifen 3₁, 3₂ ... 3ᵢ in den äußeren Wickelraumteil 202 hinein verschränkt.

## Patentansprüche

1. Stator oder Rotor (1) für eine elektrische Maschine, mit
- einem Grundkörper (2), der sich konzentrisch um eine Achse (9) erstreckt, und in dem Nuten (23) gleichmäßig in einer tangentialen Richtung (92) zur Achse (9) verteilt angeordnet sind, und mit
- Leiterschleifen (3₁, 3₂ ... 3ᵢ), die in die Nuten (23) eingesteckt sind, und die jeweils ein erstes Leiterende (311) und ein zweites Leiterende (312) aufweisen, die jeweils an einem Ende (21, 22) des Grundkörpers (2) aus diesem herausragen,
wobei jeweils die ersten Leiterenden (311) einer Leiterschleife (3₁, 3₂ ... 3ᵢ) gegenüber den zweiten Leiterenden (321) derselben Leiterschleife (3₁, 3₂ ... 3ᵢ) in entgegen gesetzte tangentiale Richtungen (92) bezüglich der Achse (9) verschränkt sind, und wobei jeweils das erste Leiterende (311) einer der Leiterschleifen (3₁) mit einem zweiten Leiterende (321) einer um eine Anzahl Nuten (23) zu ihr versetzten anderen Leiterschleife (3₁₊ₐ) in einem Verbindungspunkt (34) elektrisch leitend verbunden ist und jeweils das erste Leiterende (311) zudem in einen in radialer Richtung (93) bezüglich der Achse (9) vor den Nuten (23) angeordneten inneren Wickelraumteil (201), und/oder jeweils das zweite Leiterende (321) in einen in radialer Richtung (93) bezüglich der Achse (9) hinter den Nuten (23) angeordneten äußeren Wickelraumteil (202) hinein verschränkt ist, **dadurch gekennzeichnet, dass** die zudem in den inneren Wickelraumteil (201) oder äußeren Wickelraumteil (202) hinein verschränkten Leiterenden (311, 321) zumindest teilweise verdreht sind, so dass sie zumindest streckenweise in radialer und axialer Richtung einander überschneidend angeordnet sind, und die in den inneren Wickelraumteil (201) oder äußeren Wickelraumteil (202) hinein verschränkten benachbarten Leiterenden (311, 321) aneinander anliegend angeordnet sind, so dass die in den inneren Wickelraumteil (201) oder äußeren Wickelraumteil (202) hinein verschränkten Leiterenden (311, 321) zumindest teilweise in einer Radialebene treppenartig versetzt zueinander angeordnet sind.

2. Stator oder Rotor (1) nach Anspruch 1, **dadurch gekennzeichnet, dass** die zudem in den inneren Wickelraumteil (201) oder äußeren Wickelraumteil (202) hinein verschränkten Leiterenden (311, 321) zumindest teilweise in und gegen die radiale Richtung (93) gebogen - insbesondere zumindest teilweise bogenförmig geformt - sind.

3. Stator oder Rotor (1) nach einem der vorherigen Ansprüche, **dadurch gekennzeichnet, dass** die Leiterenden (311, 321) derselben Leiterschleife (3₁, 3₂ ... 3ᵢ) jeweils in radialer Richtung (93) hintereinander, insbesondere fluchtend, angeordnet sind.

4. Stator oder Rotor (1) nach einem der vorherigen Ansprüche, **dadurch gekennzeichnet, dass** alle Leiterenden (311, 321) an demselben Ende des Grundkörpers (2), insbesondere an einem Schaltende (21) des Grundkörpers (2), aus diesem herausragen.

5. Stator oder Rotor (1) nach einem der vorherigen Ansprüche, **dadurch gekennzeichnet, dass** die zudem in den inneren Wickelraumteil (201) oder äußeren Wickelraumteil (202) hinein verschränkten Leiterenden (311, 321) nicht in oder gegen die radiale Richtung (93) über eine Innenmantelfläche und nicht über eine Außenmantelfläche des Grundkörpers (2), aus der sie aus diesem heraustreten, hinausragen.

6. Stator oder Rotor (1) nach einem der vorherigen Ansprüche, **dadurch gekennzeichnet, dass** die Leiterenden (311, 321) jeweils ein offenes Ende (3111, 3211) aufweisen, wobei sie jeweils an ihren offenen Ende (3111, 3211) in dem Verbindungspunkt (34) elektrisch leitend verbunden sind.

7. Stator oder Rotor (1) nach einem der vorherigen Ansprüche, **dadurch gekennzeichnet, dass** jeweils ein Abstand (N31) der Nut (23) einer der beiden miteinander verbundenen Leiterschleifen (3₁) von ihrem Verbindungspunkt (34) ungleich dem Abstand (N32) der Nut (23) der anderen Leiterschleife (3₂) von dem Verbindungspunkt (34) ist.

8. Stator oder Rotor (1) nach einem der vorherigen Ansprüche, **dadurch gekennzeichnet, dass** das erste und das zweite Leiterende (311, 321) der beiden miteinander verbundenen Leiterschleifen (3₁, 3₁₊ₐ) ungleich lang sind, wobei zumindest das längere der beiden Leiterenden (311, 321) in den äußeren oder inneren Wickelraumteil (201, 202) hinein verschränkt ist.

9. Stator oder Rotor (1) nach einem der vorherigen Ansprüche, **dadurch gekennzeichnet, dass** die Leiterschleifen (3₁, 3₂ ... 3ᵢ) jeweils einen ersten Schenkel (31), an dem das erste Leiterende angeordnet ist, einen zweiten Schenkel (32), an dem das zweite Leiterende (3211) angeordnet ist, sowie einen diese verbindenden Verbindungsschenkel (33) aufweisen, wobei die Schenkel (31, 32) derselben Leiterschleife (3₁, 3₂ ... 3ᵢ) im Grundkörper (2) etwa parallel zueinander angeordnet sind, insbesondere in derselben Nut (23).

10. Elektrische Maschine, insbesondere Synchronmotor oder Gleichstrommotor, oder Starter oder Generator oder vorzugsweise Servolenkungsmotor mit einem Stator oder Rotor (1) nach einem der vorherigen Ansprüche.

11. Traktionsantrieb für ein Kraftfahrzeug mit einer elektrischen Maschine nach Anspruch 10.

12. Verfahren zum Herstellen eines Stators oder Rotors (1) nach einem der Ansprüche 1 - 9, bei dem
- die ersten Leiterenden (311) und/oder die zweiten Leiterenden (321) in und gegen die radiale Richtung verschränkt werden, so dass sie sich bogenförmig in den inneren Wickelraumteil (201) oder in den äußeren Wickelraumteil (202) hinein erstrecken, und
- die ersten Leiterenden (311) und die zweiten Leiterenden (321) anschließend in entgegen gesetzte tangentiale Richtungen (92) verschränkt werden.

13. Verfahren nach Anspruch 12, **dadurch gekennzeichnet, dass** danach jeweils das erste Leiterende (311) einer der Leiterschleifen (3₁) mit dem zweiten Leiterende (321) einer um eine Anzahl Nuten (23) zu ihr versetzten anderen Leiterschleife (3₁₊ₐ) in einem Verbindungspunkt (34) elektrisch leitend verbunden wird.

## Claims

1. Stator or rotor (1) for an electrical machine, comprising
- a main body (2) which extends concentrically about an axis (9) and in which slots (23) are arranged in a manner distributed uniformly in a tangential direction (92) to the axis (9), and comprising
- conductor loops (3₁, 3₂ ... 3ᵢ) which are inserted into the slots (23) and which each have a first conductor end (311) and a second conductor end (312) which each protrude out of the main body (2) at one end (21, 22) of the said main body,
wherein the first conductor ends (311) of one conductor loop (3₁, 3₂ ... 3ᵢ) are each interleaved in relation to the second conductor ends (321) of the same conductor loop (3₁, 3₂ ... 3ᵢ) in opposite tangential directions (92) with respect to the axis (9), and wherein in each case the first conductor end (311) of one of the conductor loops (3₁) is electrically conductively connected to a second conductor end (321) of another conductor loop (3₁₊ₐ), which is offset from it by a number of slots (23), at a connection point (34) and in each case the first conductor end (311) is additionally interleaved into an inner winding space portion (201) which is arranged in front of the slots (23) in a radial direction (93) with respect to the axis (9), and/or in each case the second conductor end (321) is interleaved into an outer winding space portion (202) which is arranged behind the slots (23) in the radial direction (93) with respect to the axis (9), **characterized in that** the conductor elements (311, 321) which are additionally interleaved into the inner winding space portion (201) or outer winding space portion (202) are at least partially rotated, so that they are arranged so as to intersect at least in sections in the radial and axial direction, and the adjacent conductor ends (311, 321) which are interleaved into the inner winding space portion (201) or outer winding space portion (202) are arranged in a manner bearing against one another, so that the conductor ends (311, 321) which are interleaved into the inner winding space portion (201) or outer winding space portion (202) are arranged in a manner offset in relation to one another in the form of stairs at least partially in a radial plane.

2. Stator or rotor (1) according to Claim 1, **characterized in that** the conductor ends (311, 321) which are additionally interleaved into the inner winding space portion (201) or outer winding space portion (202) are bent - in particular at least partially shaped in an arcuate manner - at least partially in and against the radial direction (93).

3. Stator or rotor (1) according to either of the preceding claims, **characterized in that** the conductor ends (311, 321) of the same conductor loop (3₁, 3₂ ... 3i) are each arranged one behind the other, in particular in an aligned manner, in the radial direction (93).

4. Stator or rotor (1) according to one of the preceding claims, **characterized in that** all of the conductor ends (311, 321) protrude out of the main body (2) at the same end of the said main body, in particular at a switching end (21) of the main body (2).

5. Stator or rotor (1) according to one of the preceding claims, **characterized in that** the conductor ends (311, 321) which are additionally interleaved into the inner winding space portion (201) or outer winding space portion (202) do not protrude beyond an inner lateral surface in or against the radial direction (93) and do not protrude beyond an outer lateral surface of the main body (2) from which they emerge from the said main body.

6. Stator or rotor (1) according to one of the preceding claims, **characterized in that** the conductor ends (311, 321) each have an open end (3111, 3211), wherein they are in each case electrically conductively connected at their open end (3111, 3211) at the connection point (34).

7. Stator or rotor (1) according to one of the preceding claims, **characterized in that** in each case a distance (N31) of the slot (23) of one of the two conductor loops (3₁) that are connected to one another from their connection point (34) is not equal to the distance (N32) of the slot (23) of the other conductor loop (3₂) from the connection point (34).

8. Stator or rotor (1) according to one of the preceding claims, **characterized in that** the first and the second conductor end (311, 321) of the two conductor loops (3₁, 3₁₊ₐ) that are connected to one another are of an unequal length, wherein at least the longer of the two conductor ends (311, 321) is interleaved into the outer or inner winding space portion (201, 202).

9. Stator or rotor (1) according to one of the preceding claims, **characterized in that** the conductor loops (3₁, 3₂ ... 3ᵢ) each have a first limb (31) on which the first conductor end is arranged, a second limb (32) on which the second conductor end (3211) is arranged, and a connecting limb (33) which connects them, wherein the limbs (31, 32) of the same conductor loop (3₁, 3₂ ... 3ᵢ) are arranged approximately parallel to one another in the main body (2), in particular in the same slot (23).

10. Electrical machine, in particular synchronous motor or DC motor, or starter or generator, or preferably power steering motor, comprising a stator or rotor (1) according to one of the preceding claims.

11. Traction drive for a motor vehicle comprising an electrical machine according to Claim 10.

12. Method for producing a stator or rotor (1) according to one of Claims 1-9, in which
- the first conductor ends (311) and/or the second conductor ends (321) are interleaved in and against the radial direction, so that they extend into the inner winding space portion (201) or into the outer winding space portion (202) in an arcuate manner, and
- the first conductor ends (311) and the second conductor ends (321) are then interleaved in opposite tangential directions (92).

13. Method according to Claim 12, **characterized in that** thereafter in each case the first conductor end (311) of one of the conductor loops (3₁) is electrically conductively connected to the second conductor end (321) of another conductor loop (3₁₊ₐ), which is offset from it by a number of slots (23), at a connection point (34).

## Revendications

1. Stator ou rotor (1) destiné à une machine électrique et comprenant
- un corps de base (2) qui s'étend concentriquement autour d'un axe (9) et dans lequel des rainures (23) sont ménagées uniformément réparties dans une direction tangentielle (92) à l'axe (9), et
- des boucles de conducteur (3₁, 3₂, ...3ᵢ) qui sont insérées dans les rainures (23) et qui comportent chacune une première extrémité de conducteur (311) et une deuxième extrémité de conducteur (312), qui font chacune saillie du corps de base (2) à une extrémité (21, 22) de celui-ci,
les premières extrémités de conducteur (311) d'une boucle de conducteur (3₁, 3₂, ...3ᵢ) étant entrelacées par rapport aux deuxièmes extrémités de conducteur (321) de la même boucle de conducteur (3₁, 3₂, ...3ᵢ) dans des directions tangentielles opposées (92) par rapport à l'axe (9), et la première extrémité de conducteur (311) de l'une des boucles de conducteur (3₁) étant reliée électriquement à une deuxième extrémité de conducteur (321) d'une autre boucle de conducteur (3₁₊ₐ), décalée de celle-ci d'un certain nombre de rainures (23), à un point de liaison (34) et la première extrémité de conducteur (311) étant en outre entrelacée dans une partie d'espace d'enroulement intérieur (201) disposée devant les rainures (23) par rapport à l'axe (9) dans la direction radiale (93) et/ou la deuxième extrémité de conducteur (321) étant entrelacée dans la partie d'espace d'enroulement extérieure (202) disposée derrière les rainures (23) par rapport à l'axe (9) dans une direction radiale (93), **caractérisé en ce que** les extrémités de conducteur (311, 321), entrelacées dans la partie d'espace d'enroulement intérieure (201) ou la partie d'espace d'enroulement extérieure (202), sont au moins partiellement tournées de façon à être disposées en se chevauchant au moins par portions dans la direction radiale et la direction axiale, et les extrémités de conducteur adjacentes (311, 321), entrelacées dans la partie d'espace d'enroulement intérieure (201) ou la partie d'espace d'enroulement extérieure (202), sont disposées en appui les unes sur les autres de sorte que les extrémités de conducteur (311, 321), entrelacées dans la partie d'espace d'enroulement intérieure (201) ou la partie d'espace d'enroulement extérieure (202), soient disposées en étant décalées au moins partiellement les unes des autres en escalier dans un plan radial.

2. Stator ou rotor (1) selon la revendication 1, **caractérisé en ce que** les extrémités de conducteur (311, 321), entrelacées dans la partie d'espace d'enroulement intérieure (201) ou la partie d'espace d'enroulement extérieure (202), sont au moins partiellement incurvées, en particulier au moins partiellement conformées en arc, dans la direction radiale (93) et en sens inverse.

3. Stator ou rotor (1) selon l'une des revendications précédentes, **caractérisé en ce que** les extrémités de conducteur (311, 321) d'une même boucle de conducteur (3₁, 3₂, ...3ᵢ) sont disposées à chaque fois l'une derrière l'autre dans la direction radiale (93), en particulier en alignement.

4. Stator ou rotor (1) selon l'une des revendications précédentes, **caractérisé en ce que** toutes les extrémités de conducteur (311, 321) font saillie du corps de base (2) à une même extrémité de celui-ci, notamment à une extrémité de commutation (21) de celui-ci.

5. Stator ou rotor (1) selon l'une des revendications précédentes, **caractérisé en ce que** les extrémités de conducteur (311, 321), également entrelacées dans la partie d'espace d'enroulement intérieure (201) ou la partie d'espace d'enroulement extérieure (202), ne font saillie dans la direction radiale (93) ou en sens inverse ni d'une surface d'enveloppe intérieure et ni d'une surface d'enveloppe extérieure du corps de base (2), de laquelle elles sortent de celui-ci.

6. Stator ou rotor (1) selon l'une des revendications précédentes, **caractérisé en ce que** les extrémités de conducteur (311, 321) comportent chacune une extrémité ouverte (3111, 3211), lesquelles extrémités de conducteur étant reliées électriquement à leurs extrémités ouvertes (3111, 3211) au point de liaison (34) .

7. Stator ou rotor (1) selon l'une des revendications précédentes, **caractérisé en ce qu'**une distance (N31) de la rainure (23) de l'une des deux boucles de conducteur (3₁), reliées l'une à l'autre, à son point de liaison (34) est à chaque fois différente de la distance (N32) de la rainure (23) de l'autre boucle de conducteur (3₂) au point de liaison (34).

8. Stator ou rotor (1) selon l'une des revendications précédentes, **caractérisé en ce que** les première et deuxième extrémités de conducteur (311, 321) des deux boucles de conducteur (3₁, 3₁₊ₐ), reliées l'une à l'autre, ont des longueurs différentes, au moins la plus longue des deux extrémités de conducteur (311, 321) étant entrelacée dans la partie d'espace d'enroulement extérieure ou intérieure (201, 202).

9. Stator ou rotor (1) selon l'une des revendications précédentes, **caractérisé en ce que** les boucles de conducteur (3₁, 3₂, ...3ᵢ) comportent chacune une première branche (31) sur laquelle est disposée la première extrémité de conducteur, une deuxième branche (32) sur laquelle est disposée la deuxième extrémité de conducteur (3211), et ont une branche de liaison (33) qui les relient, les branches (31, 32) de la même boucle de conducteur (3₁, 3₂, ...3ᵢ) étant disposées dans le corps de base (2) sensiblement parallèlement les unes aux autres, en particulier dans la même rainure (23) .

10. Machine électrique, en particulier moteur synchrone ou moteur à courant continu, ou démarreur ou générateur ou de préférence moteur de direction assistée comprenant un stator ou rotor (1) selon l'une des revendications précédentes.

11. Entraînement de traction pour véhicule automobile comprenant une machine électrique selon la revendication 10.

12. Procédé de fabrication d'un stator ou d'un rotor (1) selon l'une des revendications 1 à 9, procédé dans lequel
- les premières extrémités de conducteur (311) et/ou les deuxièmes extrémités de conducteur (321) sont entrelacées dans la direction radiale ou en sens inverse de façon à s'étendre en arc dans la partie d'espace d'enroulement intérieure (201) ou dans la partie d'espace d'enroulement extérieure (202), et
- les premières extrémités de conducteur (311) et les deuxièmes extrémités de conducteur (321) sont alors entrelacées dans des directions tangentielles opposées (92) .

13. Procédé selon la revendication 12, **caractérisé en ce que** la première extrémité de conducteur (311) de l'une des boucles de conducteur (3₁) est ensuite à chaque fois reliée électriquement à la deuxième extrémité de conducteur (321) d'une autre boucle de conducteur (3₁₊ₐ) , décalée d'un certain nombre de rainures (23), à un point de liaison (34).
